# EUROPÄISCHE PATENTANMELDUNG

(11) **EP 1 918 328 A1**
(43) Veröffentlichungstag der Anmeldung: **07.05.2008**
(21) Anmeldenummer: 06022672.7
(22) Anmeldetag: 31.10.2006
(51) Int. Cl.: C08L 97/02

(54) **Verfahren zur Herstellung von Zellulose-Kunststoff-Composites**

(71) Anmelder: Cognis Oleochemicals GmbH, 40589 Düsseldorf (DE)
(72) Erfinder: Bartnick, Bernhard, 40789 Monheim (DE); Daute, Dr. Peter, 27616 Beverstedt (DE); Westfechtel, Dr. Alfred, 40724 Hilden (DE)
(74) Vertreter: Herzog, Martin

(57) **Zusammenfassung**

Vorgeschlagen wird ein Verfahren zur Herstellung von Zellulose-Kunststoff-Composites, wobei man
(a) Zellulose, insbesondere Holz,
(b) einen Kunststoff, insbesondere Polyvinylchlorid,
(c) ein Carbonsäureanhydrid-Gruppen enthaltendes Kompatibilisierungsmittel und
(d) ein Katalysator aus der Gruppe der heteroaromatische Verbindungen
zusammengibt, miteinander mischt, wobei man vorzugsweise eine Temperatur im Bereich von 50 bis 130 °C einstellt und das erhaltene Dry-Blend anschließend auf eine Temperatur erhitzt, die über der Schmelztemperatur des Kunststoffes liegt, die gewünschte Formgebung durchführt und abkühlen lässt.

## Beschreibung

### Gebiet der Erfindung

Die Erfindung liegt auf dem Gebiet der Verbundwerkstoffe und betrifft ein Verfahren zur Herstellung von Zellulose-Kunststoff-Composites. Dieses Verfahren zeichnet sich durch den Einsatz spezieller Katalysatoren aus.

### Stand der Technik

Vorab sei bemerkt, dass im Rahmen der vorliegenden Anmeldung, sowohl bei der Abhandlung des Standes der Technik als auch im Beschreibungsteil, dann, wenn von Zellulose die Rede ist, der Begriff "Zellulose" nicht in seiner engeren Bedeutung zu verstehen ist, sondern abkürzend für "Zellulosehaltige native Polymere" steht. Dies dient einer flüssigeren sprachlichen Formulierung.

Sogenannte Zellulose-Kunststoff-Composites haben in jüngster Zeit zunehmende Bedeutung erfahren. Es handelt sich um Verbundwerkstoffe, die als grundlegende Materialien einerseits Zellulose, z.B. Holz, und andererseits ein oder mehrere Kunststoffe, z.B Polyvinylchlorid (PVC), enthalten. Zusätzlich sind in der Regel Additive enthalten, die die beiden genannten Materialien miteinander kompatibel (verarbeitbar) machen sollen. Dadurch wird gewährleistet, dass ein einheitlicher, weitgehend homogener Verbundwerkstoff entsteht. Derartige Composite-Materialien können auch aufgefasst werden als Kunststoffe, die Zellulose als Füllstoffe bzw. Verstärkungsmittel enthalten. Zellulosepartikel sind mithin in eine Kunststoff-Matrix eingebettet. Die Kompatibilität von zellulosehaltigen nativen Polymer und Kunststoff im Verbundwerkstoff wird durch ein geeignetes Additiv vermittelt, das für einen guten Zusammenhalt, sozusagen eine Vernetzung, der unterschiedlichen Materialien sorgt. Gelegentlich spricht man anstatt von Kompatibilisierungsmitteln auch von Vernetzungsmitteln.

WO 2006/084 163 A2 (DuPont) beschreibt Zellulose-Kunststoff-Composites, bei denen als Kompatibilisierungsmittel eine Substanz eingesetzt wird, die durch Umsetzung von Polyvinylbutyral mit einem speziellen Polymer erhältlich ist.

DE 10015913 A1 (Henkel) beschreibt die Verwendung von Addukten aus zwei Komponenten A und B und nachfolgender radialische bzw. peroxidativer Modifizierung des primären Reaktionsproduktes als Tackifier bzw. Bindemittel für Klebstoffe. Dabei werden intermediär Umsetzungsprodukte von ungesättigten Triglyceriden mit Maleinsäureanhyderid (MSA) genannt, z. B. ein Umsetzungsprodukt von Sojaöl mit MSA. Diese Intermediate weden jedoch einer nachfolgenden Modifizierung unterworfen und das Endprodukt als Tackifier für Klebstoff eingesetzt. Über die Verwendung der Intermediate als Kompatibilisierungsmittel für Zellulose-Kunststoff-Composites wird nichts offenbart.

Laurent M. Matuana et al. beschreiben (Polymer Composites 1998, Vol. 19, No. 4, S. 446-551) die Untersuchung unterschiedlicher "coupling agents" (= Kompatibilisierungsmittel) für PVC-Holz-Composites. Dabei stellen sie fest, dass bestimmte Aminosilane (gamma-Aminopropyltriethoxysilan) diesbezüglich gute Eigenschaften aufweisen, andere Verbindungen (Dichlordiethylsilan, Phthalsäureanhydrid und maleiniertes Polypropylen) dagegen ineffektiv sind.

### Beschreibung der Erfindung

Aufgabe der vorliegenden Erfindung war es, ein verbessertes Verfahren zur Herstellung von Zellulose-Kunststoff Composites, vorzugsweise für Holz-Polyvinylchlorid-Composites zu entwickeln.

Diese Aufgabe wurde erfindungsgemäß gelöst durch den Einsatz von Verbindungen mit Carbonsäureanhydrid-Gruppen (als Kompatibilisierungsmittel) in Gegenwart spezieller Katalysatoren. Bei diesen Katalysatoren handelt es sich um heteroaromatische Verbindungen.

Gegenstand der Erfindung ist ein **Verfahren** zur Herstellung von Zellulose-Kunststoff-Composites, wobei Zellulose und Kunststoff mit einem Carbonsäureanhydrid-Gruppen enthaltenden Kompatibilisierungsmittel behandelt werden und zwar in Gegenwart von heteroaromatische Verbindungen als Katalysatoren.

Ein weiterer Erfindungsgegenstand ist ein **Verfahren zur Herstellung von Zellulose-Kunststoff-Composites,** wobei man
(a) Zellulose, insbesondere Holz,
(b) einen Kunststoff, insbesondere Polyvinylchlorid,
(c) ein Carbonsäureanhydrid-Gruppen enthaltendes Kompatibilisierungsmittel und
(d) ein Katalysator aus der Gruppe der heteroaromatische Verbindungen
zusammengibt, miteinander mischt, wobei man vorzugsweise eine Temperatur im Bereich von 50 bis 130 °C einstellt und das erhaltene Dry-Blend anschließend auf eine Temperatur erhitzt, die über der Schmelztemperatur des Kunststoffes liegt, die gewünschte Formgebung durchführt und abkühlen lässt.

In einer Ausführungsform dieses Verfahrens setzt man eine Vormischung der Komponenten (b), (c) und (d) ein. Hierbei speist man zum einen Komponente (a) und parallel hierzu die zuvor miteinander gemischten Komponenten (b), (c) und (d) in den Extruder ein. Anschließend erhitzt man im Extruder auf eine Temperatur, die über der Schmelztemperatur des Kunststoffes liegt, führt die gewünschte Formgebung durch und lässt abkühlen.

### Zu den Verbindungen mit Carbonsäureanhydrid-Gruppen

Als Verbindungen mit Carbonsäureanhydrid-Gruppen c), die als Kompatibilisierungsmittel dienen, können beispielsweise eingesetzt werden:
- Anhydride von Fettsäuren,
- cyclische Anhydride von Dicarbonsäuren, wie Maleinsäureanhydrid (MSA), Itaconsäureanhydrid (ISA) oder Phthalsäureanhydrid,
- Additionsprodukte von cyclischen Anhydriden von Dicarbonsäuren, wie Maleinsäureanhydrid (MSA) oder Itaconsäureanhydrid (ISA) an olefinisch ungesättigte Fettstoffe,
- Additionsprodukte von cyclischen Anhydriden von Dicarbonsäuren, wie Maleinsäureanhydrid (MSA) oder Itaconsäureanhydrid (ISA) an Polyolefine.

In einer Ausführungsform werden die Verbindungen c) durch Addition von Verbindungen mit Carbonsäureanhydrid-Gruppen an olefinisch ungesättigte Fettstoffe hergestellt. Diese Reaktion erfolgt teilweise im Sinne einer En-Reaktion und teilweise im Sinne einer Diels-Alder-Reaktion. Die Anhydrid-Gruppe bleibt hierbei erhalten.

Auch Anlagerungsprodukte von Maleinsäureanhydrid und/oder Itaconsäureanhydrid an höhermolekulare Verbindungen wie Polyethylen oder Polypropylen können eingesetzt werden. Reaktionen von MSA oder ISA an Verbindungen wie Polyethylen oder Polypropylen erfolgen in der Regel auf radikalischem Wege.

In einer Ausführungsform setzt man als Kompatibilisierungsmittel (b) eine Verbindung ein, die ausgewählt ist aus der Gruppe Maleinsäureanhydrid, Itaconsäureanhydrid, Phthalsäureanhydrid und Anlagerungsprodukten von Maleinsäureanhydrid und/oder Itaconsäureanhydrid an ein organisches Polymer mit olefinischen Doppelbindungen.

In einer besonderen Ausführungsform setzt man Umsetzungsprodukte von Maleisäureanhydrid (MSA) und/oder Itaconsäureanhydrid (ISA) mit olefinisch ungesättigten Fettstoffen als Kompatibilisierungsmittel c) ein. Bei der Herstellung dieser Umsetzungsprodukte lässt man ein oder mehrere C=C-Doppelbindungen der olefinisch ungesättigten Fettstoffe mit der C=C-Doppelbindung von MSA und/oder ISA reagieren. Dabei wird pro reagierender C=C-Doppelbindung der olefinisch ungesättigten Fettstoffe ein Molekül MSA bzw. ISA verbraucht. MSA ist im Vergleich zu ISA bevorzugt.
Die Art der olefinisch ungesättigten Fettstoffe ist dabei an sich nicht begrenzt und es können im Prinzip alle dem Fachmann bekannten Fettstoffe eingesetzt werden, die pro Molekül ein oder mehrere C=C-Doppelbindungen enthalten. Unter Fettstoffen werden dabei einerseits natürlich vorkommende Fette und Öle verstanden, andererseits auch deren Derivate. Als prominente Derivate seien genannt: Fettsäuren, Fettalkohole sowie Ester von Fettsäuren und ein- oder mehrwertigen Alkoholen mit 1 bis 24 C-Atomen.
Besonders bevorzugt sind die Ester von Fettsäuren mit Polyolen aus der Gruppe Glykol, Trimethylolpropan, Glycerin, Dipentaerythrit und Pentaerythrit. Dabei weisen diese Ester vorzugsweise eine Jodzahl im Bereich von 10 bis 250 auf.
Ganz besonders bevorzugt sind Mono-, Di- und Triglyceride von Fettsäuren mit 8 bis 24 C-Atomen, die eine Jodzahl im Bereich von 30 bis 230 aufweisen. Beispiele besonders geeigneter Triglyceride sind Sonnenblumenöl alter und neuer Züchtung, Sojaöl, Tran, Talg, Rüböl, Tallöl, Distelöl, Erdnußöl und Leinöl.
Die Herstellung dieser speziellen Kompatibilisierungsmittel erfolgt durch Umsetzung der olefinisch ungesättigten Fettstoffe mit Maleinsäureanhydrid und/oder Itaconsäureanhydrid, vorzugsweise bei leicht erhöhter Temperatur.

Eine weitere Möglichkeit zur Herstellung der Verbindungen c) besteht darin, Maleinsäureanhydrid und/oder Itaconsäureanhydrid durch Pfropf-Reaktion an organische Substanzen anzuknüpfen. Derartige Pfropf-Reaktionen erfolgen in der Regel unter Zusatz von Radikalstartern. Bei den Anlagerungsprodukten von Maleinsäureanhydrid und/oder Itaconsäureanhydrid an organische Polymere sind insbesondere Anlagerungsprodukten von Maleinsäureanhydrid und/oder Itaconsäureanhydrid an Polyethylen und Polypropylen bevorzugt.

### Zu den Katalysatoren

Die im Rahmen der vorliegenden Erfindung einzusetzenden **Katalysatoren** sind heteroaromatische Verbindungen. Vorzugsweise sind es solche heteroaromatische Verbindungen, die pro Molekül mindestens ein N-Atom im Ring enthalten; dabei ist es weiterhin bevorzugt, dass pro Molekül mindestens ein weiterer Substituent mit einem positiven induktiven (+I-Effekt) bzw. positiven mesomeren Effekt (+M-Effekt) vorhanden ist.
Die Begriffe des induktiven und mesomeren Effektes sind dem Fachmann im Übrigen wohl vertraut (vergl. z.B. H.R. Christen, Grundlagen der org. Chemie, 4. Aufl. 1977, S. 378 ff**).** So üben z.B. Alkylgruppen einen schwachen positiven induktiven (+ I) Effekt aus. Aminogruppen können durch ihr freies Elektronenpaar einen starken positiven mesomeren (+ M) Effekt hervorrufen.
Die im Rahmen der vorliegenden Erfindung besonders bevorzugten Katalysatoren sind also solche, die heteroaromatische Verbindungen darstellen, die pro Molekül mindestens ein N-Atom im Ring enthalten und darüber hinaus pro Molekül mindestens einen weiteren Substituenten mit einem +I-Effekt bzw. einem +M-Effekt. Sofern pro Molekül zwei oder mehrere Substituenten vorhanden sind, die jeder für sich einen +I-Effekt bzw. einen +M-Effekt aufweisen, sind alle möglichen Kombinationen zulässig, d.h. alle Substituenten können entweder ausschließlich einen +I-Effekt oder einen +M-Effekt aufweisen, es sind aber auch beliebige Kombinationen von Substituenten mit +I-Effekt bzw. +M-Effekt möglich.
Insgesamt weisen die erfindungsgemäß einzusetzenden Katalysatoren die Fähigkeit auf, positive Ladungen zu stabilisieren, wodurch sie eine hohe Nucleophilie besitzen.

Beispiele geeigneter Katalysatoren sind Derivate von Pyrrol, Indolizin, Indol, Isoindol, Benzotriazol, Carbazol, Pyrazol, Imidazol, Oxazol, Isooxazol, Isothiazol, Triazol, Tetrazol, Thiazole, Pydridin, Chinolin, Isochinolin, Acridin, Phenantridin, Pyridazine, Pyrimidine, Pyrazin, Triazine sowie von diesen Substanzen abgeleitete Verbindungen, die ein oder mehrere der oben genannten Substituenten mit +I-Effekt bzw. +M-Effekt aufweisen.

Beispiele für besonders geeignete Katalysatoren geeignet sind 1-Methylimidazol, 2-Methyl-1-vinylimidazol, 1-Allylimidazol, 1-Phenylimidazol, 1,2,4,5-Tetramethylimidazol, 1 (3-Aminopropyl)imidazol, Pyrimidazol, 4-Dimethylamino-pyridin, 4-Pyrrolidinopyridin, 4-Morpholino-pyridin, 4-Methylpyridin.
Die Katalysatoren werden in Mengen von 0.01 bis 2% im besonderen 0.05 bis 1,0% bezogen auf die gesamte Rezeptur eingesetzt.

Die Kompatibilisierungsmittel werden dem Kunststoff vor der üblichen Formgebung durch Extrusion, Gießen, Spritzguß oder Kalandrierung in einer Menge von 0,1 bis 15 % im besonderen 0,5 bis 10% zugegeben. Als Kunststoffe können Thermoplaste oder Duroplaste eingesetzt werden. Besonders bevorzugt werden Thermoplaste wir PE, PP, PVC, ABS oder Styrolpolymere eingesetzt.

Wie bereits gesagt (siehe oben), wird der Begriff "Zellulose" im Rahmen der vorliegenden Erfindung abkürzend für "Zellulosehaltige native Polymere" verwendet. Dies dient einer flüssigeren sprachlichen Formulierung.
Die Art der Zellulose ist nicht beschränkt. Geeignet sind beispielsweise Holz jeglicher Art und Herkunft, Baumwolle, Kokos, Kapok, Papier, Gräser und Halme wie z.B. Reis, Bambus, Bast, Jute, Flachs, Hanf, Leinen, Reet. Vorzugsweise stammt das Zellulose aus Holz.

Form und Teilchengröße der Zellulose können vielgestaltig sein. So können beispielsweise Partikel, Späne, Stäube oder Fasern eingesetzt werden. Bei Partikeln werden in einer Ausführungsform solche mit einer Teilchengröße im Bereich von 5- 250 Mikrometern eingesetzt.

Die Art der Kunststoffe ist an sich nicht beschränkt. Es können an sich alle bekannten Homo- und Copolymere eingesetzt werden. Beispiele geeigneter Kunststoffe sind Polyethylen, z.B. HDPE, LDPE, LLDPE, UHMWPE, ULDPE, Copolymere von Ethylen mit anderen Monomeren, Polypropylen, Ethylen-Propylen-Copolymere, Terpolymere wie Ethylen-Propylen-Dien und chlorhaltige Polymere.

In einer Ausführungsform setzt man als Kunststoff Thermoplaste ein.

In einer bevorzugten Ausführungsform setzt man als Kunststoff chlorhaltige Polymere oder deren Recyclate ein. Beispiele für solche zu stabilisierenden chlorhaltigen Polymere oder deren Recyclate sind: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methacrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Polymere des Ethylens; Polymere und nachchlorierte Polymere von Chlorbutadiens und deren Copolymere mit Vinylchlorid; sowie Mischungen der genannten Polymere unter sich oder mit anderen polymerisierbaren Verbindungen.

Ferner sind umfaßt die Pfropfpolymerisate von PVC mit EVA, ABS und MBS. Bevorzugte Substrate sind auch Mischungen der vorstehend genannten Homo- und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Im Rahmen dieser Erfindung sind unter PVC auch Copolymerisate oder Pfropfpolymerisate von PVC mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist PVC Homopolymer auch in Kombination mit Polyacrylaten.

Weiterhin kommen auch Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z.B. Papier, Pigmente, Klebstoffe, die oft schwierig zu entfernen sind. Diese Fremdstoffe können auch aus dem Kontakt mit diversen Stoffen während des Gebrauchs oder der Aufarbeitung stammen, wie z.B. Treibstoffreste, Lackanteile, Metallspuren und Initiatorreste.

### Beispiele

### 1. Eingesetzte Substanzen

| | |
|---|---|
| Evipol SH 5730 | PVC (Fa. Ineos) |
| Holzpulver 50-100 micron | Holzmehl Sonderfertigung (Fa. Codip, Holland) |
| Stabiol CZ 2001/1 | CaZn-stabilisatorcompound (Fa. Reagens, Lohne) |
| Edenol D 81 | Epoxidiertes Sojaöl (Fa. Cognis-Oleochemicals) |
| Katalysator | n-Methylimidazol (Fa. Fluka) |

### 2. Herstellung der erfindungsgemäßen Kompatibilisierungsmittel

### Beispiel 1(10 % MSA addiert an Sojaöl):

1000 g raffiniertes Sojaöl wurden im Wasserstrahlvakum bis 110°C getrocknet und unter Stickstoff mit 100g MSA versetzt. Das Gemisch wurde 3 h bei 220 °C erhitzt. Man erhielt eine klare, braungelbe leicht viskose Flüssigkeit.
Kenndaten: Viskosität (Brookfield, Spindel 21, 50 upm, 40°C) = 181 cps

### 3. Herstellung von Dryblends

Aus PVC-Pulver und verschiedenen Additiven wurde in einem Mischer der Firma Henschel ein Dryblend hergestellt (Materialmenge = 3 kg, Heiztemperatur = 120°C, anschließendes Abkühlen). Die Zusammensetzungen (Rezepturen V1 und B2) sind der nachfolgenden Tabelle 1 zu entnehmen (Angaben in Gewichtsteilen). Hierbei gehen die eingesetzten Additive sowohl eine Verbindung mit dem Holz als auch mit dem PVC ein.

**Tabelle 1**

| Beispiel: | V1 | **B2** |
|---|---|---|
| PVC Evipol SH 5730(Fa. Ineos) | 100 | 100 |
| Holzpulver 50-100 micron | 100 | 100 |
| Stabiol CZ 2001/1 | 1,5 | 1,5 |
| Edenol D81 | 10 | 10 |
| Sojaöl+10% MSA | - | 10 |
| n-Methyimidazol | - | 0,5 |

Rezeptur B2 ist erfindungsgemäß. Rezeptur V1 dient dem Vergleich.

### 4. Anwendungstechnische Versuche. Herstellung der Walzfelle

Die Dryblends wurden auf einer Laborwalze der Firma Collin zu einem Fell ausgewalzt. (Parameter des Walzwerks: Drehzahl = 15 UpM; Temperatur = 190°C). Als Maß für die Dispergierwirksamkeit wurden die Oberflächen der Walzfelle mittels Lichtmikroskop beurteilt.

Optische Beurteilung der Walzfell-Oberfläche
V1: grob strukturiert, nicht glänzend
B2: grob strukturier, stark glänzend

Die erfindungsgemäßen Kompatibilisierungsmittel zeigten, ganz speziell auf der Oberfläche der Probe gemäß Beispiel B2, eine Vernetzung des MSA-Fett-Adduktes zwischen Holz und Kunststoff und somit eine stark verbesserte Verteilung des Füllstoffes Holz im System Wood-Fiber-Composite.

### 5. Herstellung von Pressplatten und Bestimmung der Kerbschlagzähigkeit

Aus den wie unter Punkt 4.) hergestellten Walzfellen wurden anschließend Pressplatten hergestellt.

Zu diesem Zweck wurde das plastifizierte Walzfellmaterial in einen verchromten Eisenrahmen verbracht und unter einer Temperatur von 170°C, 4,5 Minuten bei 200bar Druck verpresst. Aus diesen Pressplatten (400 x 40 mm) wurde anschließend die Doppel-V-Kerbschlagzähigkeit (DIN EN 179) geprüft.

Der Kerbschlagversuch wurde an einem genormten Probestück mit einem Pendelschlagwerk durchgeführt (23°C / 50% rel. Luftfeuchtigkeit, 3 Tage). Gemessen wurde die Verformungsarbeit bis zum Bruch. Die Ergebnisse sind ein Kennwert für die Zähigkeit, Sprödigkeit und Homogenität des Werkstoffes. Sie sind Tabelle 2 zu entnehmen.

**Tabelle 2**

| Rezeptur | Rest-Breite | Höhe | Schlagarbeit | Schlagzähigkeit | Bruchart |
|---|---|---|---|---|---|
| | [mm] | [mm] | [mJ] | [mJ/mm²] | |
| V1 / 1 | 20,10 | 2,16 | 132 | 3,0 | 1 |
| V1 / 2 | 20,07 | 2,12 | 154 | 3,6 | 1 |
| V1 / 3 | 20,18 | 2,05 | 176 | 4,3 | 1 |
| V1 / 4 | 20,14 | 2,12 | 146 | 3,4 | 1 |
| V1 / 5 | 20,17 | 2,04 | 141 | 3,4 | 1 |
| V1 / 6 | 20,10 | 2,13 | 152 | 3,6 | 1 |
| Mittelwert: | 20,13 | 2,10 | **150** | **3,6** | 1 |
| | | | | | |

| Rezeptur | Rest-Breite | Höhe | Schlagarbeit | Schlagzähigkeit | Bruchart |
|---|---|---|---|---|---|
| | [mm] | [mm] | [mJ] | [mJ/mm] | |
| B2 / 1 | 20,05 | 1,98 | 186 | 4,7 | 1 |
| B2 / 2 | 20,08 | 1,96 | 179 | 4,5 | 1 |
| B2 / 3 | 20,11 | 1,95 | 204 | 5,2 | 1 |
| B2 / 4 | 20,12 | 1,99 | 181 | 4,5 | 1 |
| B2 / 5 | 20,11 | 1,96 | 196 | 5,0 | 1 |
| B2 / 6 | 20,15 | 1,93 | 159 | 4,1 | 1 |
| Mittelwert: | 20,10 | 1,96 | **184** | **4,7** | 1 |

Bruchart: 1: vollständiger Bruch 2: Scharnierbruch 3: teilweiser Bruch

Die erfindungsgemäßen MSA-Fett-Addukte führten zu einem stark verbesserten Bruchverhalten der Wood-Plastic-Composite Probekörper. Dieses ist zu erkennen an der Schlagarbeit von 150 mJ ohne MSA-Fett-Addukt und 184 mJ mit MSA-Fett-Addukt, sowie and der Schlagzähigkeit 3,6 mJ/mm ohne MSA-Fett-Addukt und 4,7 mJ/mm mit MSA-Fett-Addukt.

### 6. Präparation der Probenkörper zur Bestimmung der Zugfestigkeit

Aus den unter Punkt 5.) hergestellten Pressplatten wurden Probestäbe mit den Abmaßen 10 x 2 cm geschnitten. Die Probestäbe wurden anschließend in einer Zugfestigkeitsprüfmaschine eingespannt und langsam zunehmend bis zum Bruch belastet (nach der Methode gemäß DIN 53455). Die dabei aufgebrachten Kräfte wurden dokumentiert. Sie sind Tabelle 3 zu entnehmen.

**Tabelle 3**

| | Höchstkraft | Zugfestigkeit | Reißdehnung | Reißfestigkeit |
|---|---|---|---|---|
| Rezeptur | N | N/mm² | % | N/mm² |
| V1 | 761 | 19,0 | 9,6 | 19 |
| B2 | 1176 | 29,4 | 12,1 | 29,4 |

Die erfindungsgemäßen Fett-MSA-Addukte führen zu einer stark verbesserten Reißfestigkeit der Wood-Plastic-Composite Probekörper.

### 7. Präparation der Probenkörper zur Bestimmung von Glanz auf der Oberfläche

Aus den unter Punkt 4.) hergestellten Walzfellen wurden gleichmäßige Probestreifen von 6 x 6 cm geschnitten.
Der Glanz wurde durch Reflektion des Lichtstrahls gemessen, der auf eine Oberfläche fiel. Der Glanzwert kann als Korrelationswert zur Glättemessung interpretiert werden. Das bedeutet je glatter die Oberfläche, je besser ist die Verteilung des Füllstoffes Holz in der Kunststoffmischung. Die Ergebnisse der Glanzbestimmung sind Tabelle4 zu entnehmen.

**Tabelle 4**

| **Rezeptur** | **Vorderseite** | **Rückseite** |
|---|---|---|
| V1 | 2,6 | 2,8 |
| B2 | 4,2 | 7,7 |

Die erfindungsgemäßen Fett-MSA-Addukte + Katalysator führten zu einem stark verbesserten Glanz der Wood-Plastic-Composite Oberflächen und zeigten somit eine deutlich verbesserte Verteilung und Dispergierung des Füllstoffes Holz innerhalb der Kunststoffmischung.

## Patentansprüche

1. Verfahren zur Herstellung von Zellulose-Kunststoff-Composites, wobei man (a) Zellulose, (b) einen Kunststoff, (c) ein Carbonsäureanhydrid-Gruppen enthaltendes Kompatibilisierungsmittel und (d) ein Katalysator aus der Gruppe der heteroaromatische Verbindungen zusammengibt, miteinander mischt und das erhaltene Dry-Blend anschließend auf eine Temperatur erhitzt, die über der Schmelztemperatur des Kunststoffes liegt, die gewünschte Formgebung durchführt und abkühlen lässt.

2. Verfahren nach Anspruch 1, wobei man als Katalysator (d) eine heteroaromatische Verbindung einsetzt, die pro Molekül mindestens ein N-Atom im Ring enthält.

3. Verfahren nach Anspruch zwei, wobei der Katalysator (d) pro Molekül mindestens einen weiteren Substituenten mit einem positiven induktiven bzw. positiven mesomeren Effekt enthält.

4. Verfahren nach einem der Ansprüche 1 bis 3, wobei man als Kompatibilisierungsmittel (b) eine Verbindung einsetzt, die ausgewählt ist aus der Gruppe der
• Anhydride von Fettsäuren,
• cyclischen Anhydride von Dicarbonsäuren,
• Additionsprodukte von cyclischen Anhydriden von Dicarbonsäuren an olefinisch ungesättigte Fettstoffe und
• Additionsprodukte von cyclischen Anhydriden von Dicarbonsäuren an Polyolefine.

5. Verfahren nach einem der Ansprüche 1 bis 4, wobei man als zellulosehaltiges natives Polymer Holz einsetzt.

6. Verfahren nach Anspruch 5, wobei man das Holz in Form von Partikeln, Spänen, Stäuben oder Fasern einsetzt.

7. Verfahren nach einem der Ansprüche 1 bis 6, wobei man als Kunststoff Thermoplaste einsetzt.

8. Verfahren nach einem der Ansprüche 1 bis 6, wobei man als Kunststoff Polyvinylchlorid einsetzt.
